# EUROPÄISCHE PATENTSCHRIFT

(11) **EP 0 735 065 B1**
(45) Veröffentlichungstag und Bekanntmachung des Hinweises auf die Patenterteilung: **28.05.1997**
(21) Anmeldenummer: 95104369.4
(22) Anmeldetag: 24.03.1995
(51) Int. Cl.: C08F 285/00, C08F 251/00, C09D 151/02, D21H 17/28

(54) **Amphotere Polymerisatdispersion, Verfahren zur Herstellung und deren Verwendung**
Amphoteric polymer dispersion, process for preparation and its use
Dispersion de polymères amphotères, procédé de fabrication et leur application

(43) Veröffentlichungstag der Anmeldung: 02.10.1996
(73) Patentinhaber: Giulini Chemie GmbH, D-67065 Ludwigshafen (DE)
(72) Erfinder: Exner, Reiner, Dr., D-67098 Bad Dürkheim (DE); Ulubay, Hasan, Dr., D-67125 Dannstadt-Schauernheim (DE); Hetterich, Karl, D-67146 Deidesheim (DE)

(56) Entgegenhaltungen:
- EP-A- 0 479 245
- US-A- 4 552 940
- US-A- 5 243 008
- DATABASE WPI Section Ch, Week 9144 Derwent Publications Ltd., London, GB; Class A97, AN 91-320747 'Surface crack-free paper prodn....' & JP-A-03 213 597 (SEIKO CHEM IND. K.K.)
- DATABASE WPI Section Ch, Week 9144 Derwent Publications Ltd., London, GB; Class A97, AN 91-320747 'Surface crack-free paper prodn....' & JP-A-03 213 597

## Beschreibung

Polymerisatdispersionen auf wässriger Basis sind charakterisiert durch das Vorliegen von dispers verteilten Polymerisatteilchen in einem wässrigen Dispersionsmedium. Zur Stabilisierung eines solchen Systems, bei dem die diskreten Polymerisatteilchen aus thermodynamischen Gründen zu einer Zusammenlagerung neigen, werden in der Regel grenzflächenaktive Substanzen eingesetzt. Die Möglichkeit der Verwendung von Stärke und Stärkederivaten als solche grenzflächenaktiven Substanzen zur Herstellung von wässrigen Polymerisatdispersionen ist bereits mehrfach vorgeschlagen worden.

Die EP 0 276 770 B1 betrifft ein Leimungsmittel in Form einer wässrigen Polymerisatdispersion, bei der unter Verwendung einer abgebauten Stärke mit einer reduzierten Viskosität von 0,04 bis 0,12 dl/g eine Monomermischung von 20 - 65% Acrylnitril, von 80 - 35 % Acrylsäureester und von 0 - 10 % anderer ethylenisch ungesättigter Monomere in wässriger Phase in einer Stufe copolymerisiert werden.

Die EP 0 536 597 A1 beschreibt wäßrige Polymerisatdispersionen, die durch radikalische Polymerisation ungesättigter Monomeren erhältlich sind, und wenigstens ein durch Hydrolyse in wässriger Phase erhältliches Stärkeabbauprodukt zugesetzt enthält, das ein mittleres Molekulargewicht von 2 500 bis 25.000 aufweist.

In beiden Fällen ist die Art und Weise, in der die radikalische Polymerisation durchgeführt wird, nicht geeignet ein amphoteres Copolymerisat zu erzeugen. Eine Beschreibung von Ladungscharakteristiken, die für die Stabilisierung solcher Systeme sehr wichtig ist, und sie für die Verwendung als Beschichtungsmittel und Leimungsmittel für Papier geeignet macht, erfolgt nicht.

In der EP 0 479 245 A2 werden Polymere beschrieben, die als Adsorbentien für wässrige Medien verwendbar sind, wobei die Polymeren durch eine Copolymerisation eines ampholytischen Ionenpaaraes und mindestens eines weiteren Monomeren entstehen, wobei dieses zweite Monomer Acrylamid, Methacrylamid und Acrylnitril sein kann. Weiterhin enthalten diese Polymere auch sog. Vernetzungsmittel, die ihrerseits mind. 2 olefinische funktionelle Gruppe tragen, wobei jede dieser Gruppen zur Vernetzung geeignet ist. Das Polymere enthält weiterhin Polysaccharide, Polypropylen oder Polyethylen, die mit den vorstehend genannten Comonomeren ein Pfropfpolymer bilden. Das so entstandene Polymer enthält ausschließlich nur wasserlösliche Monomere und wird in einer einstufigen Reaktion hergestellt.

In der US 4,552,940 wird ein Stärke enthaltendes Pfropfpolymer beschrieben, das in Form einer wässrigen Lösung entsteht. Die Aufgabe in dieser Erfindung war, durch die Zugabe von Styrol die Viskosität der Stärkelösung einzustellen. Diese so eingestellten Stärkelösungen sind dann verwendbar als Klebstoffe oder als Beschichtungsmittel.

Die Aufgabe der vorliegenden Erfindung bestand darin, amphotere wässrige Polymerisatdispersionen zu finden, die mit Hilfe eines geeigneten Verfahrens unter Verwendung von Stärke- und/oder Stärkederivaten koagulatfrei hergestellt werden können. Diese Polymerisatdispersionen sollten bei einheitlicher Teilchengrößenverteilung eine sehr gute Stabilität aufweisen, und durch ihre Oberflächenladung sowohl mit anionischen, als auch mit kationischen Systemen verträglich sein, sowie eine Anwendung in einem großen pH-Bereich gewährleisten.

Die erfindungsgemäßen amphoteren Polymerisatdispersionen sind in einer mehrstufigen Emulsionspolymerisation erhältlich, wobei in der ersten Verfahrensstufe eine sehr feinteilige anionische Polymerisatdispersion hergestellt wird, ausgehend von einer Monomerenmischung bestehend aus ethylenisch ungesättigten Monomeren, die ausserdem noch ungesättigte Carbon-, Sulfon-, und Phosphonsäuren (Monomere A) bis zu 30 Gew. % in der Mischung enthalten und diese Mischung in Gegenwart von enzymatisch-hydrolytisch bzw. säure-hydrolytisch abgebauter Stärke und/oder Stärkederivaten polymerisiert wird, wobei die Stärke und/oder Stärkederivate, ein mittleres Molekulargewicht von 500 - 2000 vorzugsweise von 800 - 1500 g/mol und eine innere Viskosität unter 0,1 dl/g aufweisen. Die Konzentration der vorliegenden wässrigen Stärkelösungen kann bis zu 40 Gew.%, vorzugsweise aber zwischen 10 und 35 Gew. % betragen. Das Gewichtserhältnis von Stärke zu Monomerenmischung beträgt zwischen (20:1) bis (1:20). Der Feststoffgehalt der so erhaltenen anionischen Dispersion beträgt 15 bis 45 Gew. %, bevorzugt 20 bis 40 Gew. %, und weist ein Zeta-Potential zwischen -3 und -70 mV, vorzugsweise zwischen -5 und -30 mV auf.

In Gegenwart der in Stufe 1 erhaltenen anionischen Dispersion wird dann mit einer weiteren Monomerenmischung polymerisiert, die außer den ethylenisch ungesättigten Monomeren, auch Monomere mit kationischem (basischem) Charakter (Monomere B) bis zu 35 Gew.%, bevorzugt 5 bis 20 Gew.% enthält. Das Gewichtsverhältnis zwischen der in der Stufe 1 hergestellten Dispersion und dem Anteil an Monomeren, die in der Stufe 2 zugesetzt werden beträgt (10:1) bis (1:10), wobei der Feststoffgehalt der so hergestellten amphoteren Polymerisatdispersion 20 bis 55 Gew. %, bevorzugt 25 bis 45 Gew. % beträgt und eine einheitliche Teilchengrößenverteilung von kleiner 300 nm aufweist.

Als radikalisch polymerisierbare Monomere kommen insbesondere monoethylenisch ungesättigte Monomere wie Olefine, vinylaromatische Monomere wie Styrol, alpha-Methylstyrol, Chlorstyrol oder Vinyltoluole, Ester aus Vinylalkohol und 1-18 C-Atome aufweisende Monocarbonsäuren wie Vinylacetat, Vinylbutyrat, Vinylstearat, Ester aus vorzugsweise 3-6 C-Atome aufweisenden alpha,beta - monoethylenisch ungesättigten Mono- und Dicarbonsäuren, insbesondere Acrylsäure, Methacrylsäure, Maleinsäure, Fumarsäure, mit im allgemeinen 1-12 vorzugsweise 1-8 und insbesondere 1-4 C-Atomen aufweisenden Alkanolen, insbesondere Acrylsäure und Methacrylsäuremethyl-, Ethyl-, n-Butyl-, Isobutyl-, Ethylhexyl-und Cyclohexylester, sowie Acrylnitril und konjugierte Diene wie 1,3-Butadien in Betracht.
Desweiteren finden funktionelle Monomere, wie Hydroxyethylacrylat- und Methacrylat, Hydroxypropylacrylat- und Methacrylat, n-Vinylpyrrolidon, Acrylamid, Methacrylamid und Trimethylolpropan-Triacrylat Verwendung.

Die typisch anionische Ladungscharakteristik der in der ersten Verfahrensstufe hergestellten Dispersion wird durch Copolymerisation von ethylenisch ungesättigten Carbon,- Sulfon,- oder Phosphonsäuren erreicht. Hier können beispielsweise Acrylsäure, Methacrylsäure, Maleinsäure, Fumarsäure, Vinylsulfonsäure, Vinylphosphonsäure,
2-Acrylamido-propansulfonsäure und Styrolsulfonsäure sowie deren Alkali und/oder Erdalkalisalze oder Ammoniumsalze eingesetzt werden. Das Gewichtsverhältnis von Stärke zu Monomeren liegt in der ersten Verfahrensstufe zwischen 20:1 und 1:20. Der Anteil an ungesättigten Carbon,- Sulfon,- oder Phosphonsäuren bezogen auf die Monomerenmenge der ersten Verfahrensstufe beträgt bis zu 30 Gew. %.

In der ersten Verfahrensstufe wird in einem kontinuierlichen Zulauf die Monomerenmischung, die die Monomeren A enthält der vorliegenden wässrigen Stärkelösung zugeführt. Die Reaktionstemperatur liegt zwischen 40 und 95 °C. Als wasserlösliche Radikalinitiatoren werden sowohl Peroxide, wie Ammonium -oder Alkalimetallperoxodisulfat oder H₂O₂, als auch Azoverbindungen verwendet, die zur Stärkelösung vorgelegt werden.

Bei Kombinationen mit reduzierenden Komponenten wie Ascorbinsäure, Hydroxymethansulfinsäure, Natriumsulfit, Natriumhydrogensulfit der reduzierenden Metallverbindungen , wie Fe(II),-Ce(IV),- oder Mn(II)-Salzen, können die Initiatoren alternativ auch im kontinuierlichen Zulaufverfahren dosiert werden.

Die zweite Verfahrensstufe ist dadurch gekennzeichnet, daß in Gegenwart der in der ersten Verfahrensstufe hergestellten Dispersion ethylenisch ungesättigte Monomere polymerisiert werden, die auch stickstoffhaltige Monomere mit basischem Charakter (Monomere B) enthalten, wobei die Polymerisation unter Verwendung von wasserlöslichen Radikalstartern und/oder eines Redoxsystems bei Temperaturen zwischen 20 bis 95 °C durchgeführt wird. Die Monomere B sind ausgewählt aus der Gruppe der Acrylsäure- und/oder Methacrylsäurediaminoalkylester, z.B Dimethylaminoethylmethacrylat, Dimethyaminoethylacrylat und aus der Gruppe der Acrylsäure- und/oder Methacrylsäurediaminoalkylamide, z.B. Dimethylaminopropylmethacrylamid, Dimethylaminopropylacrylamid, sowie aus weiteren basischen Vinylverbindungen, wie n-Vinylimidazol, n-Vinyl-2-Methylimidazolin. Es können weiterhin die quarternisierten Derivate dieser Monomere eingesetzt werden, wobei als Quarternisierungsmittel Methylchlorid, Dimethylsulfat, Diethylsulfat, Ethylchlorid und Benzylchlorid in Frage kommen.

Als Radikalinitiator für die zweite Verfahrensstufe eignet sich vorzugsweise ein Redoxsystem, wobei die Reaktionstemperaturen zwischen 20 °C und 95 °C liegen können. Für das Initiatorsystem können als reduzierende Komponenten Reduktionsmittel,z.B. Ascorbinsäure, Hydroxymethansulfinsäure-Natriumsalz, Natriumsulfit, Natriumhydrogensulfit, oder reduzierende Metallverbindungen z.B. Eisen(II),- Ce(IV),- Mangan(II),- Salze, bevorzugt in Form der entsprechenden Sulfate, Verwendung finden. Geeignete Oxidationsmittel sind Peroxide und/oder Hydroperoxide z.B. Wasserstoffperoxid und tert.-Butylhydroperoxid, Alkalimetallperoxodisulfate oder Ammoniumperoxodisulfate. Die Zugabe eines solchen kombinierten Initiatorsystems erfolgt vorzugsweise so, daß die reduzierende Komponente zusammen mit der in der ersten Verfahrensstufe hergestellten Dispersion vorgelegt wird, und die oxidierende Komponente zeitgleich mit dem Monomerzulauf in das System dosiert wird.

Die so hergestellten erfindungsgemäßen amphoteren Polymerisatdispersionen weisen einen Feststoffgehalt von 20 - 55 Gew.% , vorzugsweise von 25 - 45 Gew.% und ausserdem eine einheitliche Teilchengrößenverteilung mit einer mittleren Teilchengröße von kleiner als 300 nm auf, die eine direkte Folge der zweistufigen Verfahrensweise ist.

Die erfindungsgemäßen Polymerisatdispersionen finden in den gemäß den Ansprüchen 5 bis 8 genannten Anwendungsgebieten hauptsächlich Verwendung, die in den entsprechenden Beispielen belegt werden.

### Herstellungsbeispiele:

### Beispiel 1

### Erste Verfahrensstufe

In einem Doppelmantelrührbehälter mit Flügelrührer, Rückflußkühler und N₂-Zuleitung werden 500 Teile Wasser vorgelegt und unter Rühren 126 Teile Kartoffelstärkeacetatester, Substitutionsgrad 0,03 zugegeben. Anschließend versetzt man mit 0,3 Teile alpha-Amylase LP, heizt auf 80 °C und hält bei dieser Temperatur 2 Stunden. Nach Zugabe von 3 Teilen Natriumperoxodisulfat, gelöst in 15 Teilen Wasser wird eine Mischung von 30 Teilen Styrol, 15 Teilen n-Butylacrylat und 1 Teil Acrylsäure über einen Zeitraum von 40 Minuten kontinuierlich dosiert. Nach Ende des Zulaufs rührt man weitere 60 Minuten bei 80 °C.

### Zweite Verfahrensstufe:

Zur vorliegenden Dispersion der ersten Verfahrensstufe gibt man bei 80 °C 1 Teil Hydroxymethansulfinsäure-Natriumsalz gelöst in 10 Teilen Wasser zu. Unmittelbar danach werden bei gleichem Dosierbeginn, aber getrennt voneinander die Mischung von 90 Teilen Styrol und 45 Teilen n-Butylacrylat, die Mischung von 16 Teilen Trimethylammoniumethylmethacrylat-Chlorid in 14 Teilen Wasser und die Mischung von 3 Teilen Wasserstoffperoxid in 35 Teilen Wasser über einen Zeitraum von 150 Minuten kontinuierlich zudosiert. Nach Ende der Dosierung rührt man 120 Minuten bei 85 °C nach und erhält nach dem Abkühlen die koagulatfreie Polymerisatdispersion mit einem Feststoffgehalt von 33 % und einem pH-Wert von 5,5 und einer mittleren Teilchengröße von 110 nm.

### Beispiel 2

### Erste Verfahrensstufe:

In einem 1 l Doppelmantelrührgefäß mit Flügelrührer, Rückflußkühler und N₂-Zuleitung werden 500 Teile Wasser vorgelegt und unter Rühren 100 Teile Kartoffelstärkeacetatester, Substitutionsgrad 0,027) zugegeben. Man versetzt mit 0,3 Teilen alpha-Amylase LP heizt auf 80 °C und hält 2 Stunden bei dieser Temperatur. Danach gibt man 3 Teile Natriumperoxodisulfat gelöst in 15 Teilen Wasser zu und dosiert die Mischung von 40 Teilen Styrol, 5 Teilen n-Butylacrylat, und 2 Teilen Acrylsäure kontinuierlich über einen Zeitraum von 30 Minuten. Nach Ende des Zulaufs rührt man weitere 60 Minuten bei der Temperatur von 80 °C.

### Zweite Verfahrensstufe:

Zur vorliegenden Dispersion der ersten Verfahrensstufe gibt man 1 Teil Hydroxymethansulfinsäure-Natriumsalz gelöst in 10 Teilen Wasser zu. Unmittelbar danach werden bei gleichem Dosierbeginn, aber getrennt voneinander, die Mischung von 90 Teilen Styrol, 45 Teilen n-Butylacrylat und 60 Teilen Dimethylaminoethylmethacrylat, sowie die Mischung von 3 Teilen Wasserstoffperoxid in 35 Teilen Wasser über einen Zeitraum von 120 Minuten zudosiert.

Nach Ende der Dosierung hält man weitere 2 Stunden bei dieser Temperatur, kühlt ab und erhält die koagulatfreie Polymerisatdispersion mit einem Feststoffgehalt von 33 %, einem pH-Wert von 5,0, und einer mittleren Teilchengröße von ca. 140 nm.

### Beispiel 3

### Erste Verfahrensstufe

In einem 1 l Doppelmantelreaktor mit Flügelrührer, Rückflußkühler und N₂-Zuleitung werden 500 Teile entionisiertes Wasser vorgelegt und unter Rühren 315 Teile einer heißlöslichen oxydativ abgebauten Kartoffelstärke zugegeben. Danach gibt man 0,3 Teile alpha-Amylase zu und heizt auf 80 °C. Diese Temperatur wird 2 Stunden gehalten und anschließend 3 Teile 37 %ige Formaldehydlösung zugegeben. Nach Zugabe von weiteren 3 Teilen Natriumperoxodisulfat werden innerhalb von 35 Minuten eine Mischung aus 15 Teilen Styrol, 30 Teilen n-Butylacrylat und 2 Teilen Acrylsäure kontinuierlich zudosiert. Man läßt noch 1 Stunde nachpolymerisieren und erhält einen Saatlatex mit einer mittleren Teilchengröße von 85 nm bei einem Feststoffgehalt von 32,5 %.

### Zweite Verfahrensstufe:

Zur vorliegenden Dispersion der ersten Verfahrensstufe wird bei 82 °C 1 Teil Hydroxymethansulfinsäurenatriumsalz in 10 Teilen Wasser gelöst zugegeben. Unmittelbar danach wird bei gleichem Dosierbeginn getrennt voneinander eine Lösung von 3 Teilen Wasserstoffperoxyd in 10 Teilen Wasser und eine Lösung von 30 Teilen Trimethylammoniumethylmethacrylat-Chlorid in 20 Teilen Wasser und eine Mischung von 90 g Styrol und 60 g n-Butylacrylat über eine Zeit von 120 Minuten kontinuierlich dosiert. Man läßt eine Stunde bei dieser Temperatur nachpolymerisieren und erhält nach Zugabe von 9 Teilen 20 % iger Natronlauge die koagulatfreie Dispersion mit einer mittleren Teilchengröße von ca. 190 nm und einem Feststoffgehalt von 45,5 % bei einem pH-Wert von 5,3.

### Beispiel 4

### Erste Verfahrensstufe:

In einem 1 l Doppelmantelrührgefäß mit Flügelrührer, Rückflußkühler und N₂-Zuleitung werden 440 Teile Wasser vorgelegt und 250 Teile Stärke einer heißlöslichen, oxydativ abgebauten Kartoffelstärke zugegeben. Man versetzt mit 0,2 Teilen alpha-Amylase LP, heizt auf 80 °C und hält 2 Stunden bei dieser Temperatur. Danach gibt man 1,5 Teile Natriumperoxodisulfat gelöst in 10 Teilen Wasser zu und dosiert die Mischung von 30 Teilen Styrol, 15 Teilen Butylacrylat, und 6 Teilen Acrylsäure kontinuierlich über einen Zeitraum von 30 Minuten. Nach Ende des Zulaufs rührt man weitere 60 Minuten bei der Temperatur von 80 °C.

### Zweite Verfahrensstufe:

Zur vorliegenden Dispersion der ersten Verfahrensstufe gibt man 1 Teil Hydroxymethansulfinsäure-Natriumsalz gelöst in 5 Teilen Wasser zu. Unmittelbar danach werden bei gleichem Dosierbeginn, aber getrennt voneinander, die Mischung von 90 Teilen Styrol mit 45 Teilen n-Butylacrylat, die Lösung von 22,5 Teilen Trimethyammoniumethylmethacrylat-Chlorid in 57,5 Teilen Wasser und die Lösung von 3 Teilen Wasserstoffperoxid in 30 Teilen Wasser und über einen Zeitraum von 120 Minuten zudosiert. Nach Ende der Dosierung hält man weitere 2 Stunden bei dieser Temperatur, dann kühlt man ab. Nach Zugabe von 15,5 Teilen einer 20 Gew.% igen Natriumhydroxidlösung erhält man die koagulatfreie Polymerisatdispersion mit einem Feststoffgehalt von 40,5 %, einem pH-Wert von 5,3, und einer mittleren Teilchengröße von ca. 270 nm.

Im folgenden werden die anwendungstechnischen Vorteile der erfindungsgemäßen Dispersionen beschrieben.
Es wird hierbei die Eignung der Dispersionen als Leimungsmittel, als Bindemitel für Beschichtungen und die gute Verträglichkeit mit verschiedenen geladenen Papierchemikalien gezeigt.

In der Tabelle 1 wurde als Maß für die gute Verträglichkeit das Zeta-Potential dargestellt.

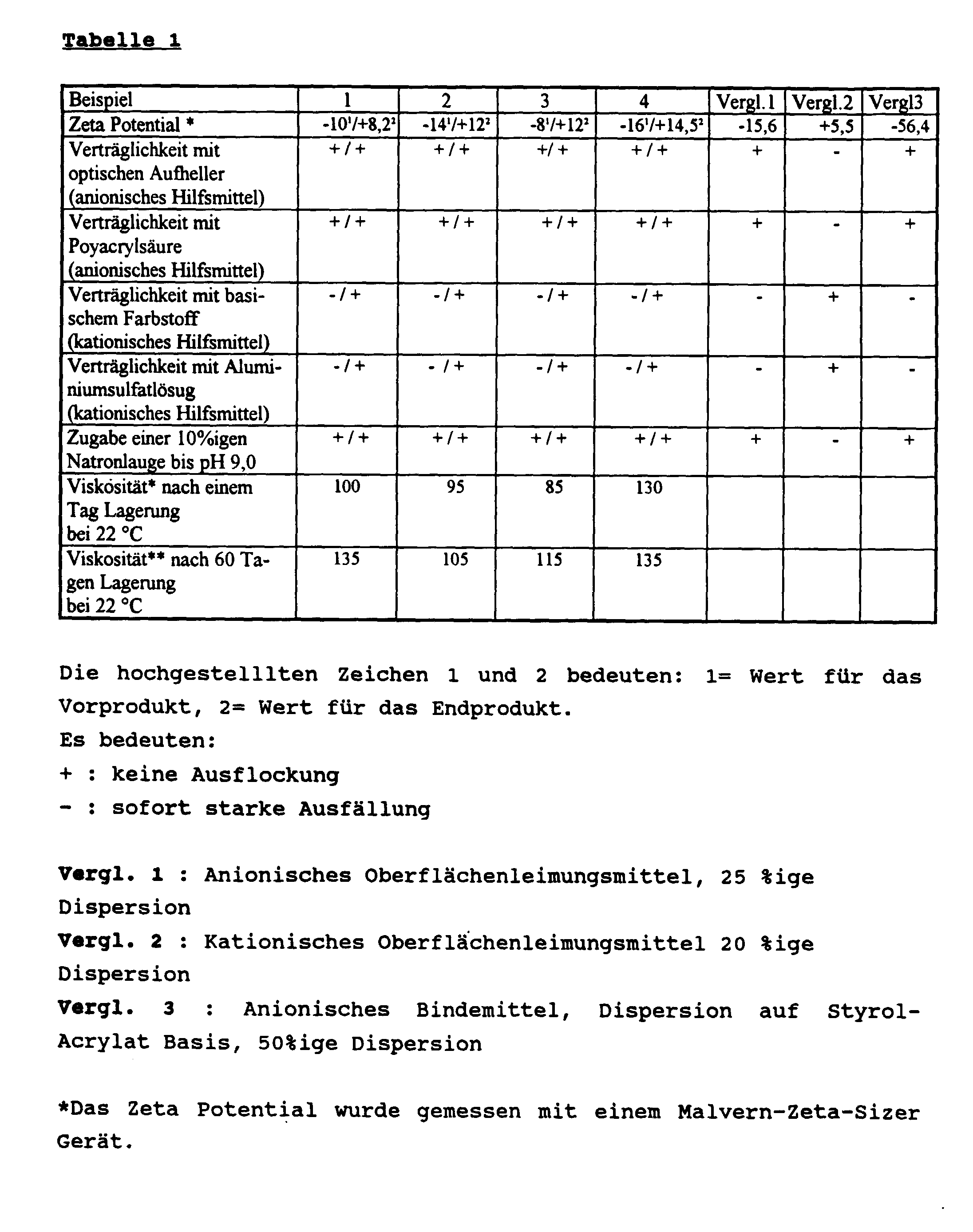

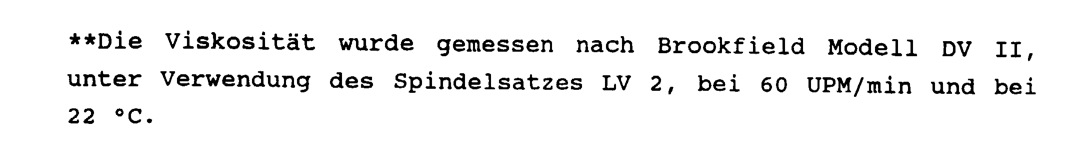

Die Verträglichkeit mit optischen Aufhellern wurde getestet: 50 Gramm der erfindungsgemäßen Dispersion wurde mit 950 Gramm Wasser verdünnt und dann mit 10 Gramm eines optischen Aufhellers vom Stilben-Typ gemischt.

Die Verträglichkeit mit Polyacrylsäure (40%ige wässrige Lösung) wurde getestet: zu der erfindungsgemäßen Dispersion wurden 5 Gew. % Polyacrylsäure zugegeben.

Die Verträglichkeit mit basischem Farbstoff wurde getestet: 50 g der erfindungsgemäßen Dispersion wurde mit 950 g Wassser verdünnt und dann mit 5 g basischem Farbstoff versetzt.

Die Verträglichkeit mit Aluminiumsulfat: zu der erfindungsgemäßen Dispersion wurde 5 Gew.% Aluminiumsulfat-Lösung (8 % Al₂O₃) zugegeben.

### Anwendungstechnische Prüfung der erfindungemäßen Produkte zur Verwendung als Oberflächenleimungsmittel, Prüfung des COBB- Wertes nach DIN 53132

Die Imprägnierung erfolgte mit einer Laborleimpresse für Papiere der Fa. Einlehner, anschließend wurde mit einem Phototrockner Typ 641603 der Fa. Gerster (Bruchsal) 2 min bei 100 °C getrocknet.Als Leimflotte wurde eine 5%ige, enzymatisch abgebaute native Maisstärke mit einer Viskosität von 50 mPaS bei 50 °C, einem pH-Wert von 6,8 und einer Wasserhärte von 19 dH benutzt. Zu dieser Leimflotte wurden gemäß Tabelle 2 die aufgeführten Leimungsmittel gegeben.Als Rohpapier diente ein Papier aus Zellstoff mit einem Anteil von 60 % Kurzfaser und 40 % Langfaser bei einem Mahlgrad von 30 Schopper-Riegler und einem Füllstoffgehalt von 25 % Kaolin bezogen auf den eingesetzen Zellstoff. Das Flächengewicht betrug 80 g/m². Die Papiere hatten nach dem Leimpressendurchgang eine relative Leimflottenaufnahme von 50 %, woraus sich die tatsächlich aufgenommene Leimungsmittelmenge zu 50 % der in Tabelle 2 angegebenen Konzentration ergibt.

**Tabelle 2**

| Beispiel | 1 | 2 | 3 | 4 | Vergl. 1 | Vergl. 2 |
|---|---|---|---|---|---|---|
| Leimungsmittel Konzentration in % | 2,4 | 2,4 | 2,4 | 2,4 | 2,4 | 2,4 |
| pH Wert 7,2 | 7,0 | 7,0 | 7,2 | 6,8 | 7,3 | 4,0 |
| Cobb 60" [g/m2] 135 | 41¹/36² | 39¹/34² | 42¹/32² | 38¹/30² | 50 | 35 |
| Vergleich 1: Anionisches Oberflächenleimungsmittel, 25%ige Dispersion Vergleich 2: Kationisches Oberflächenleimungsmittel, 20%ige Dispersion | | | | | | |

| | | | | | | |
|---|---|---|---|---|---|---|
| 1= Wert für das Vorprodukt, | | | | | | |
| 2= Wert für das Endprodukt | | | | | | |

### Anwendungstechnische Prüfung der erfindungsgemäßen Produkte als Bindemittel für pigmentierte Beschichtungen

Es wurden Papierbeschichtungsmassen hergestellt, die bei Verwendung der erfindungsgemäßen Dispersionen die Bedruckbarkeit, vor allem die Ink-Jet Bedruckbarkeit deutlich verbessern. Die Herstellung der Beschichtungsmassen erfolgte so, daß die als Bindemittel verwendeten Dispersionen vorgelegt und die Pigmente bzw. Pigmentzubereitungen dem wässrigem Bindemittel unter kräftigem Rühren zugegegben wurden. Anschließend wurde der Feststoffgehalt der Beschichtungsmassen mit Wasser auf 50 % eingestellt. Der Auftrag erfolgte mit einer Beschichtungsrakel, wobei das Auftragsgewicht bei 12,5 g/m² lag. Als Rohpapier wurde ein vollgeleimtes Streichrohpapier (Cobb 60"=22 g/m²) aus reinem Zellstoff mit einem Flächengewicht von 80 g/m² verwendet.Nach Trocknung der Papiere für 2 min bei 120°C und Klimatisierung für 24 h bei 21°C und 50 % relative Luftfeuchte wurden die Druckversuche mit einem Tintenstrahldrucker der Fa.Hewlett-Packard, Modell HP-Desk-Jet 550C durchgeführt. Der Druck erfolgte im Farbmodus, beurteilt wurden die Farbtiefe schwarzer Flächen (schwarz), das Verlaufen des schwarzen Farbtones auf gelbem Untergrund (bleeding) und die Randschärfe, d.h. das Auslaufen von Farbe und Schwarz in nicht bedruckten Flächen (wicking).

**Tabelle 3**

| **Beschichtungen** | | | | | | | | |
|---|---|---|---|---|---|---|---|---|
| Beschichtungsmasse | | 1 | 2 | 3 | 4 | Vergl.1 | Vergl.3 | Vergl.4 |
| Anteile der Dispersion gemäß Beispiel | 1 | 50 | | | | | | |
| | 2 | | 50 | | | | | |
| | 3 | | | 50 | | | | |
| | 4 | | | | 50 | | | |
| | Vergl.1 | | | | | 50 | | |
| | Vergl.3 | | | | | | 50 | |
| | Vergl.4 | | | | | | | 50 |
| Einstellen mit NaOH auf pH-Wert | | 8,5 | 8,4 | 8,5 | 8, | 8,6 | 8,5 | 8,5 |
| Anteil an CaCO₃₋ Pigment -slurry (Qualität 90 % < 2µm) | | 50 | 50 | 50 | 50 | 50 | 50 | 50 |
| Beurteilung "schwarz" | | 2 | 2 | 2 | 1 | 6 | 8 | 3 |
| Beurteilung "bleeding" | | 1 | 1 | 1 | 1 | 10 | 10 | 5 |
| Beurteilung "wicking" | | 2 | 1 | 1 | 2 | 8 | 10 | |
| **Vergl.1**:Anionisches Oberflächenleimungsmittel, 25 %ige Dispersion **Vergl.3**:Anionisches Bindemittel, Dispersion auf Styrol-Acrylat Basis, 50 %ige Dispersion **Vergl.4**:Polyvinylalkohol,88% Verseifungsgrad, 20 %ige wässrige Lösung | | | | | | | | |

### Vergleichsbeispiel 5 (einstufiges Verfahren , Stand der Technik)

In einem 1l-Doppelmantelrührgefäß mit Flügelrührer, Rückflußkühler und N₂-Zuleitung werden 44 Teile Wasser vorgelegt und 250 Teile Stärke unter Rühren zugeggeben. Man versetzt mit 0,2 Teilen alpha-Amylase LP, heizt auf 90 °C und hält 2 Stunden bei dieser Temperatur. Danach gibt man 1 Teil Hydroxymethansulfinsäure-Natriumsalz gelöst in 5 Teilen Wasser zu. Unmittelbar danach werden bei gleichem Dosierbeginn die Mischung von 120 Teilen Styrol, 60 Teilen n-Butylacrylat und 6 Teilen Acrylsäure, die Lösung von 22,5 g Trimethylammoniumethylmethacrylat-Chlorid in 57,5 g Wasser und die Lösung von 3 Teilen Wasserstoffperoxid (30%ig Lösung) in 30 Teilen Wasser über einen Zeitraum von 120 Minuten zudosiert. Nach Ende der Dosierung rührt man weitere 2 Stunden bei dieser Temperatur. Nach Abkühlen auf Raumtemperatur und Zugabe von 20 %iger Natronlauge bis pH=5,3 erhält man die 40 %ige Polymerisatdispersion, aus der 35 Teile Koagulat abfiltriert wurden. Die mittlere Teilchengröße lag bei 530 nm.

### Vergleichsbeispiel 6

### Erste Verfahrensstufe:

In einem 1 l Doppelmantelreaktor mit Flügelrührer, Rückflußkühler und N₂-Zuleitung werden 500 Teile Kartoffelstärke zugegegben. Danach gibt man 0,08 Teile alpha-Amylase zu, heizt auf 80 °C und hält diese Temperatur 30 Minuten. Nach Versetzen mit 3 Teilen 30%iger Formaldehydlösung wird die weitere Versuchsdurchführung wie bei Beispiel 3 vorgenommen.
Die Viskosität des Produktes ist so hoch, daß erst nach Verdünnen mit weiteren 400 Teilen Wasser eine gute Fließfähigkeit erreicht wird. Bei dem dann vorliegendem Feststoffgehalt von 32,5 % liegt die Viskosität bei 300 mPas und steigt nach 12 Tagen wieder auf > 15.000 mPas an.

| Beispiel | 1 | 2 | 3 | 4 | 5 | 6 |
|---|---|---|---|---|---|---|
| Gewichtsmittleres Molekulargewicht der Stärke | 880 | 800 | 1600 | 1200 | 1200 | 5400 |
| Grenzviskosität der Stärkelösung in dfl/g | 0,03 | 0,04 | 0,06 | 0,05 | 0,05 | 0,20 |
| Koagulat | < 0,1% | < 0,1% | < 0,1% | < 0,1% | 3 % | < 0,1% |
| Viskosität des End-produktes* | 100 | 95 | 85 | 130 | 300 | > 15000 |

| | | | | | | |
|---|---|---|---|---|---|---|
| * Die Viskosität wurde mit einem Viskosimeter nach Brookfielfd, Spindel 1, bei 60 Upm bei 22 °C in mPas gemessen. | | | | | | |

### Verträglichkeit mit kationischen und anionischen Harzleimdispersionen und kationischen Alkylketendispersionen

| Beispiel | 1 | 2 | 3 | 4 | Vergl. 1 | Vergl. 2 | Vergl. 3 |
|---|---|---|---|---|---|---|---|
| 1=Anionische Harzdispersion | + | + | + | + | - | + | + |
| 2=kationische Harzdispersion | + | + | + | + | + | - | - |
| 3=kationische Alkylketendimer Dispersion | + | + | + | + | + | - | - |
| + = ohne Ausfälung - = mit Ausfällung (Koagulatbildung) 1=anionische Harzleimdispersion: Zeta-Potential: -24,0 mV 2=kationische Harzleimdispersion: Zeta-Potential: +38,1 mV 3=kationische Alkylketendimer-Dispersion:Zeta Potential:+21,0 mV **Vergl.1:**Anionisches Oberflächenleimungsmittel, 25%ige Dispersion **Vergl.2:**Kationisches Oberflächenleimungsmittel, 20%ige Dispersion **Vergl.3:**Anionisches Bindemittel, Dispersion auf Styrol-Acrylat Basis, 50%ige Dispersion | | | | | | | |

### Anwendungstechnische Prüfung der erfindungsgemäßen Dispersionen zur Verwendung als Masseleimungsmittel in Kombination mit einem anderen Leimungsmittelsystem

Dieses Beispiel zeigt die Wirkung der erfindungsgemäßen Dispersionen in Kombination mit anderen Leimungsmitteln, insbesondere mit alkylketendimerhaltigen Systemen.
Besonders deutlich wird der Vorteil der Mischungen gegenüber den Einzelkomponenten.

Auf einer Kämmerer-Versuchsmaschiene wird ein Recycling-Papier mit folgender Zusammensetzung hergestellt: 50 % Zeitungspapier und 50 % Illustrierte und Zeitschriften.
Zusätzlich wurden bei der Papierherstellung 0,04 Gew. % kationisches Polyacrylamid als Retentionsmittel in den Dünnstoff kontinuierlich dosiert zugegeben. Der pH-Wert im Stoffauflauf beträgt 7,0-7,3 und die Maschienengeschwindigkeit 2,5 m/min. In der Trockenpartie betrug die höchste Temperatur 105 °C. Als Leimunsgmittel wurde das in Beispiel 4 hergestellte Produkt und eine kationische Alkylketendispersion und die Mischung der beiden Produkte im Gewichtsverhältnis 1:1 und 2:1, eingesetzt.
Die Dosierung des Leimungsmittels erfolgt vor dem Retentionsmittel. Das Flächengewicht des hergestellten Papiers beträgt jeweils 80 g/cm². Die mit den verwendeten Leimungsmitteln erzielten Leimungswerte sind in der Tabelle 6 zusammengestellt. Die Prüfung erfolgte nach der Lagerung der Papiere für 10 Min bei 105 Grad C.

**Tabelle 6**

| **Masseleimung** | | |
|---|---|---|
| Produkt | Dosierung | Cobb 60 [g/m²] |
| kationische Alkylketendispersion | 4 % | 100 |
| | 5 % | 96 |
| Beispiel 4 | 4 % | 114 |
| | 5 % | 114 |
| Beispiel 4 mit Alkylketendimer Dispersion im Gewichtsverhältnis 2:1 | 4 % | 34 |
| | 5 % | 23 |
| Beispiel 4 mit Alkylketen-Dispersion im Gewichtsverhältnis 1:1 | 4 % | 36 |
| | 5 % | 22 |

## Patentansprüche

1. Amphotere, wässrige Polymerisatdispersion, erhältlich in einer zweistufigen radikalischen Copolymerisation:
1. Stufe : Herstellung einer anionischen Polymerisatdispersion, in dem man eine Monomerenmischung, bestehend aus ethylenisch ungesättigten Monomeren, die bis zu 30 Gew.% an Monomeren mit anionischem Charakter (Monomere A) aus der Gruppe der ethylenisch ungesättigten Carbon-, Sulfon- und Phosphonsäuren enthält, in Gegenwart von enzymatisch-hydrolytisch und/oder säure-hydrolytisch abgebauten Stärke und/oder Stärkederivaten polymerisiert, wobei die Stärke ein mittleres Molekulargewicht von 500-2000, vorzugsweise 800-1500 g/mol und eine innere Viskosität kleiner als 0,1 dl/g aufweist und die Konzentration der Stärkelösung bis zu 40 Gew.%, bevorzugt 10 bis 35 Gew.% beträgt, wobei das Gewichtsverhältnis von Stärke zu Monomerenmischung (20:1) bis (1:20) beträgt und die so erhaltene anionische Dispersion einen Feststoffgehalt von 15 bis 45 Gew.%, bevorzugt 20 bis 40 Gew.% aufweist und das Zeta-Potential der Dispersion zwischen -3 und -70 mV, vorzugsweise zwischen -5 und -30 mV liegt.
2. Stufe. Die in der Stufe 1 erhaltene anionische Dispersion wird mit einer weiteren Monomerenmischung polymerisiert, die außer den ethylenisch ungesättigten Monomeren auch Monomere mit kationischen (basischem) Charakter (Monomere B) bis zu 35 Gew.% , bevorzugt 5 bis 20 Gew.% enthält, wobei das Gewichtsverhältnis zwischen der in der Stufe 1 hergestellten Dispersion und dem Anteil an Monomeren, die in der Stufe 2 zugesetzt werden, 10:1 bis 1:10 beträgt, wobei der Feststoffgehalt der so hergestellten amphoteren Polymerisatdispersion 20 bis 55 Gew. %, bevorzugt 25 bis 45 Gew.% beträgt und eine einheitliche Teilchengrößenverteilung aufweist.

2. Verfahren zur Herstellung der anionischen Polymerisatdispersion der Stufe 1 nach Anspruch 1, dadurch gekennzeichnet, daß die Monomermischung enthaltend die Monomere A in einem kontinuierlichen Zulauf mit der vorgelegten wässrigen Stärkelösung bei Temperaturen zwischen 40 und 95 °C unter Verwendung von wasserlöslichen Radikalstartern umgesetzt wird, wobei die Konzentration der Stärkelösung bis zu 40 Gew.%, bevorzugt 10 bis 35 Gew.%, das Verhältnis Stärke zu Monomerenmischung (20:1) bis (1:20) und der Anteil an anionischen Monomeren in der Mischung bis zu 30 Gew.%, beträgt.

3. Verfahren zur Herstellung der amphoteren Polymerisatdispersion nach Anspruch 1, dadurch gekennzeichnet, daß die radikalische Emulsionspolymerisation unter Verwendung der nach Anspruch 2 hergestellten Dispersion (Stufe 1) unter Verwendung von wasserlöslichen Radikalstartern und/oder eines Redoxsystems bei Temperaturen zwischen 20 und 95 °C umgesetzt wird, wobei die Zugabe eines gegebenenfalls aus einem Redoxsystem bestehenden Radikalstarters so erfolgt, daß die reduzierende Komponente des Starters und die anionische Dispersion (Stufe 1) vorgelegt werden und die oxydierende Komponente zeitgleich mit dem Zulauf der Monomerenmischung enthaltend die Monomeren B in das Reaktionssystem zudosiert wird und die so hergestellte amphotere Polymerdispersion einen Feststoffgehalt von 20 bis 55 Gew.%, bevorzugt 25 bis 45 Gew.% aufweist.

4. Verfahren zur Herstellung der amphoteren Polymerisatdispersion nach Anspruch 3, dadurch gekennzeichnet, daß die Monomeren B stickstoffhaltige Monomere mit basischem Charakter aus der Gruppe der Acrylsäure- und/oder Methacrylsäurediaminoalkylester, der Acrylsäure- und/oder Methacrylsäurediaminoalkylamide und der Vinylimidazole, sowie deren quaternisierte Derivate sind, wobei als Quaternisierungsmittel Methylchlorid, Dimethylsulfat, Diethylsulfat, Ethylchlorid oder Benzylchlorid verwendet werden.

5. Verwendung der amphoteren Polymerisatdispersion nach Anspruch 1 als Leimungsmittel in der Papier, Pappe und Kartonherstellung allein oder in Mischung mit anderen Leimungsmittelsystemen.

6. Verwendung der amphoteren Polymerisatdispersion nach Anspruch 1 als Bindemittel bzw. Bindemittelbestandteil in Bindemittelsystemen in der Druck und Farbenindustrie.

7. Verwendung der amphoteren Polymerisatdispersion nach Anspruch 1 für die Herstellung von pigmenthaltigen oder pigmentfreien Überzügen und Beschichtungen von Papier , Holz, Metall und Glas.

8. Verwendung der anionischen Polymerisatdispersion hergestellt nach Anspruch 1, Stufe 1, als Leimungsmittel in der Papier,- Pappe,- und Kartonherstellung allein oder in Mischung mit anderen Leimungsmittelsystemen.

## Claims

1. Amphoteric aqueous polymer dispersion obtainable by a two-step radical copolymerisation:
1st Step : Preparation of an anionic polymer dispersion in which a monomer mixture consisting of ethylenically unsaturated monomers which contains up to 30% by weight of monomers of an anionic nature (monomer A), selected from the group of ethylenically unsaturated carboxylic, sulphonic and phosphonic acids, is polymerised in the presence of starch and/or starch derivatives which have been broken down by enzymatic hydrolysis and/or acid hydrolysis, the starch having a mean molecular weight of 500-2000, preferably 800-1500 g/mol and having an internal viscosity of less than 0.1 d/g and the concentration of the starch solution being up to 40% by weight, preferably 10 to 35% by weight, the weight ratio of starch to monomer mixture being (20:1) to (1:20) and the resulting anionic dispersion having a solids content of 15 to 45% by weight, preferably 20 to 40% by weight, and the zeta-potential of the dispersion being between -3 and -70 mV, preferably between -5 and -30 mV.
2nd Step. The anionic dispersion obtained in Step 1 is polymerised with another monomer mixture which contains, in addition to the ethylenically unsaturated monomers, monomers of a cationic (basic) nature (monomer B) in amounts of up to 35% by weight, preferably 5 to 20% by weight, the weight ratio between the dispersion prepared in Step 1 and the proportion of monomers added in Step 2 being from 10:1 to 1:10, the solids content of the amphoteric polymer dispersion thus prepared being from 20 to 55% by weight, preferably 25 to 45% by weight, and having a uniform particle size distribution.

2. Process for preparing the anionic polymer dispersion of Step 1, characterised in that the monomer mixture containing monomer A is reacted, by a continuous feed process, with the aqueous starch solution prepared, at temperatures of between 40 and 95°C, using water-soluble radical starters, the concentration of starch solution being up to 40% by weight, preferably 10 to 35% by weight, the ratio of starch to monomer mixture being from (20:1) to (1:20) and the proportion of anionic monomers in the mixture being up to 30% by weight.

3. Process for preparing the amphoteric polymer dispersion, characterised in that the radical emulsion polymerisation is reacted, using the dispersion prepared in claim 2 (Step 1), using water-soluble radical starters and/or a Redox system at temperatures of between 20 and 95°C, a radical starter optionally consisting of a Redox system being added in such a way that the reducing component of the starter and the anionic dispersion (Step 1) are prepared first and the oxidising component is added in metered amounts simultaneously with the inflow of monomer mixture containing the monomers B into the reaction system and the amphoteric polymer dispersion thus prepared has a solids content of from 20 to 55% by weight, preferably 25 to 45% by weight.

4. Process for preparing the amphoteric polymer dispersion according to claim 3, characterised in that the monomers B are nitrogen-containing monomers of a basic nature selected from the group comprising the diaminoalkylacrylates and/or methacrylates, the acrylic and/or methacrylic acid diaminoalkylamides and the vinyl imidazoles, and the quaternary derivatives thereof, the quaternising agents used being methylchloride, dimethylsulphate, diethylsulphate, ethylchloride or benzylchloride.

5. Use of the amphoteric polymer dispersion according to claim 1 as a sizing agent in paper, board and cardboard manufacture on its own or in admixture with other sizing systems.

6. Use of the amphoteric polymer dispersion according to claim 1 as a binder or binder component in binder systems in the printing and paint industries.

7. Use of the amphoteric polymer dispersion according to claim 1 for the preparation of pigment-containing or pigment-free coatings and glazes for paper, wood, metal and glass.

8. Use of the anionic polymer dispersion prepared according to claim 1, Step 1, as a sizing agent in the manufacture of paper, board and cardboard, on its own or in admixture with other sizing systems.

## Revendications

1. Dispersion polymère aqueuse amphotère que l'on obtient par copolymérisation radicalaire en deux étapes:
Première étape: préparation d'une dispersion polymère anionique dans laquelle on polymérise un mélange de monomères constitué par des monomères à insaturation éthylénique, qui contient, jusqu'à concurrence de 30% en poids, des monomères à caractère anionique (monomères A) choisis parmi le groupe comprenant des acides carboxyliques, sulfoniques et phosphoniques à insaturation éthylénique, en présence d'amidon et/ou de dérivés de l'amidon, décomposés par hydrolyse à l'aide d'une enzyme et/ou par hydrolyse à l'aide d'un acide, l'amidon présentant un poids moléculaire moyen de 500-2000, de préférence de 800-1500 g/mole et une viscosité interne inférieure à 0,1 dl/g, la concentration de la solution d'amidon s'élevant jusqu'à concurrence de 40% en poids, de préférence de 10 à 35% en poids, le rapport pondéral de l'amidon au mélange de monomères s'élevant de (20:1) à (1:20) et la dispersion anionique ainsi obtenue présentant une teneur en substances solides de 15 à 45% en poids, de préférence de 20 à 40% en poids, le potentiel zêta de la dispersion se situant entre -3 et -70 mV, de préférence entre -5 et -30 mV.
Deuxième étape: on polymérise la dispersion anionique obtenue à l'étape 1 avec un autre mélange de monomères qui, en plus des monomères à insaturation éthylénique, contient également des monomères à caractère cationique (basique) (monomères B) jusqu'à concurrence de 35% en poids, de préférence de 5 à 20% en poids, le rapport pondéral entre la dispersion préparée à l'étape 1 et la fraction de monomères que l'on ajoute à l'étape 2 s'élevant de 10:1 à 1:10, la teneur en substances solides de la dispersion polymère amphotère ainsi obtenue s'élevant de 20 à 55% en poids, de préférence de 25 à 45% en poids et présentant une distribution granulométrique homogène.

2. Procédé pour la préparation de la dispersion polymère anionique de l'étape 1, caractérisé en ce qu'on fait réagir le mélange de monomères contenant les monomères A, sous forme d'une addition en continu, avec la solution d'amidon aqueuse déposée au préalable, à des températures entre 40 et 95°C, en utilisant des agents d'amorçage radicalaires hydrosolubles, la concentration de la solution d'amidon s'élevant jusqu'à concurrence de 45% en poids, de préférence de 10 à 35% en poids, le rapport de l'amidon au mélange de monomères s'élevant de (20:1) à (1:20) et la fraction de monomères anioniques dans le mélange s'élevant jusqu'à concurrence de 30% en poids.

3. Procédé pour la préparation de la dispersion polymère amphotère, caractérisé en ce que la polymérisation en émulsion radicalaire avec utilisation de la dispersion préparée conformément à la revendication 2 (étape 1) est réalisée en utilisant des agents d'amorçage radicalaires hydrosolubles et/ou un système redox, à des températures entre 20 et 95°C, l'addition d'un agent d'amorçage radicalaire constitué, le cas échéant, d'un système redox ayant lieu de telle sorte que l'on dépose au préalable le composant réducteur de l'agent d'amorçage et la dispersion anionique (étape 1), et on procède à l'addition dosée du composant oxydant dans le système réactionnel simultanément à l'addition du mélange de monomères contenant les monomères B, et la dispersion polymère amphotère ainsi obtenue présente une teneur en substances solides de 20 à 55% en poids, de préférence de 25 à 45% en poids.

4. Procédé pour la préparation de la dispersion polymère amphotère selon la revendication 3, caractérisé en ce que les monomères B sont des monomères azotés à caractère basique choisis parmi le groupe comprenant les esters diaminoalkyliques d'acide acrylique et/ou d'acide méthacrylique, les diaminoalkylamides d'acide acrylique et/ou d'acide méthacrylique et les vinylimidazoles, ainsi que leurs dérivés quaternisés, dans lequel, comme agents de quaternisation, on utilise le chlorure de méthyle, le diméthylsulfate, le diéthylsulfate, le chlorure d'éthyle ou le chlorure de benzyle.

5. Utilisation de la dispersion polymère amphotère selon la revendication 1, comme agent d'encollage dans la fabrication du papier, du carton-pâte et du carton, seule ou en mélange avec d'autres systèmes d'agents d'encollage.

6. Utilisation de la dispersion polymère amphotère selon la revendication 1, comme liant, respectivement comme constituant de liant dans des systèmes de liants dans l'industrie de l'impression et de la teinture.

7. Utilisation de la dispersion polymère amphotère selon la revendication 1, pour la préparation de revêtements et d'enductions contenant des pigments ou exempts de pigments, du papier, du bois, du métal et du verre.

8. Utilisation de la dispersion polymère anionique préparée conformément à la revendication 1, étape 1, comme agent d'encollage dans la fabrication du papier, du carton-pâte et du carton, seule ou en mélange avec d'autres systèmes d'agents d'encollage.
